# EUROPÄISCHE PATENTSCHRIFT

(11) **EP 2 996 898 B1**
(45) Veröffentlichungstag und Bekanntmachung des Hinweises auf die Patenterteilung: **05.07.2017**
(21) Anmeldenummer: 14724098.0
(22) Anmeldetag: 16.05.2014
(51) Int. Cl.: B60K 6/26, B60L 3/00, F02N 11/08, B60L 11/12, F02N 11/04, B60L 11/18

(54) **ANTRIEBSEINHEIT ZUR ANSTEUERUNG EINES MOTORS**
DRIVE UNIT FOR CONTROLLING AN ENGINE
UNITÉ D'ENTRAÎNEMENT POUR LA COMMANDE D'UN MOTEUR

(30) Priorität: 17.05.2013 DE 102013008420
(43) Veröffentlichungstag der Anmeldung: 23.03.2016
(73) Patentinhaber: ABB Schweiz AG, 5400 Baden (CH)
(72) Erfinder: STEMMLER, Christoph, CH-5402 Baden (CH); VON HOFF, Thomas, CH-5443 Niederrohrdorf (CH); EHRLER, Urs, CH-5412 Gebensdorf (CH)
(74) Vertreter: ABB Patent Attorneys
(86) Internationale Anmeldenummer: PCT/EP2014/060056
(87) Internationale Veröffentlichungsnummer: WO 2014/184336

(56) Entgegenhaltungen:
- US-A1- 2005 279 242
- US-A1- 2007 124 037
- US-A1- 2012 169 114
- US-B1- 6 486 568

## Beschreibung

### Technisches Feld

Die Erfindung betrifft eine Antriebseinheit zur Ansteuerung einer Maschine. Insbesondere bezieht sich die vorliegende Erfindung auf eine verbesserte Ansteuerung zum Starten eines Verbrennungsmotors, welcher zum Antreiben eines an den Motor gekoppelten Traktionsgenerators ausgebildet ist.

### Stand der Technik

Aus dem Stand der Technik ist bekannt, dass das Starten oder Anlassen eines leistungsstarken Verbrennungsmotors wie etwa eines Dieselmotors, welcher zum Antreiben einer Maschine, wie zum Beispiel bei Traktionsanwendungen für Züge oder Landmaschinen verwendet wird, oftmals mit einem zusätzlichen, dafür jedoch wesentlich kleineren, das heisst, einen leistungsschwächeren Hilfsmotor bewerkstelligt wird, welcher seine Anfahrenergie über eine zusätzliche, an den Hilfsmotor angeschlossene Batterie, eine sogenannte Starterbatterie, bezieht. Eine solche Anordnung findet man beispielsweise in Kraftfahrzeugen vor. Dort liefert eine Starterbatterie, welcher als Akkumulator ausgebildet ist, den elektrischen Strom für den Anlasser des Verbrennungsmotors des Kraftfahrzeuges. Neben der Aufgabe der Bereitstellung eines bestimmten Energiepotentials oder Spannungsniveaus für das Anlassen des Motors, wird die Starterbatterie jedoch oftmals ergänzend eingesetzt, um die Versorgung des Bordnetzes und diverse daran angeschlossene Verbraucher des Fahrzeuges zu unterstützen.

Ein ähnliches Verfahren zum Starten eines Motors wird in der WO 2012/091831 beschrieben. Dabei ist ein Motor mit einem Drehstromgenerator und einem zusätzlichen Hilfsmotor verbunden. Der Drehstromgenerator erzeugt die notwendige Traktionsenergie für den Antrieb des Fahrzeugs. Der zusätzliche Hilfsmotor wird von einer Batterie gespeist, um das erforderliche Drehmoment für das Anfahren und das Starten des Motors bereitzustellen.

Weiterer Stand der Technik ist beispielsweise aus der US 2012/169050 A1 bekannt.

### Nachteile des Standes der Technik

Die aus dem Stand der Technik bekannten Verfahren zum Starten eines Motors, mit einer Starterbatterie, weisen jedoch diverse Nachteile auf. Oftmals reicht das von der Batterie zur Verfügung gestellte Energiepotential während des Startvorgangs des Motors nicht aus, wenn die Batterie beispielsweise nur ausgelegt ist, eine relative niedrige Versorgungsspannung von 24 Volt bereitzustellen. In solch einem Fall muss eine zusätzliche Bauteilkomponente wie zum Beispiel ein Hochsetzsteller dafür sorgen, dass das von der Batterie bereitgestellte Energiepotential auf ein höheres Energiepotential gehoben wird. Ausserdem bewirkt die relativ niedrige von der Batterie zur Verfügung gestellte Spannung hohe Batterieströme während des Startvorgangs des Motors.

Ein weiterer Nachteil zur Verwendung einer Starterbatterie besteht in deren temperaturabhängigen Leistungsfähigkeit. Diesen Nachteil weisen jedoch generell alle Batterien auf.

Die Leistungsfähigkeit einer Batterie sinkt dabei umso mehr, je tiefer die Umgebungstemperatur ist, welcher die Batterie ausgesetzt ist.

### Technische objektive Aufgabe

Die technische objektive Aufgabe der vorliegenden Erfindung besteht darin, eine verbesserte und einfachere Antriebseinheit zur Ansteuerung und zum Starten eines Motors bereitzustellen, welche die genannten Nachteile aus dem Stand der Technik vermeidet oder zumindest minimiert. Insbesondere ist es die Aufgabe der vorliegenden Erfindung eine verbesserte Antriebseinheit bereitzustellen, welche das zuverlässige Starten eines Motors ermöglicht und dabei nur eine minimale schaltungstechnische Anpassung an die vorhandene Motor- und Antriebseinheit eines Fahrzeugs erforderlich macht. Eine weitere Aufgabe der vorliegenden Erfindung besteht darin, den Startvorgang eines Motors unabhängig von einem vorhandenen Energiepotential einer Batterie, der sogenannten Fahrzeugbatterie, zu machen, welche normalerweise das Starten des Motors unterstützt und um das an der Fahrzeugbatterie hängende Bordnetz des Fahrzeugs zu entlasten.

Die Aufgabe der vorliegenden Erfindung wird mit den Merkmalen des Anspruches 1 gelöst. Vorteilhafte Ausführungsformen der Erfindung finden sich in den beigefügten Unteransprüchen.

Insbesondere wird die Aufgabe durch eine Antriebseinheit gelöst, umfassend ein Stromrichter, welcher mit einer Arbeitsmaschine verbindbar ist, umfassend einen Zwischenkreis welcher einerseits mit einem ersten Wechselrichter und andererseits mit einem zweiten Wechselrichter koppelbar ist, wobei der erste Wechselrichter ausgelegt ist, wechselspannungsseitig mit einem Motor verbindbar zu sein und gleichspannungsseitig mit dem Zwischenkreis verbunden ist und wobei der zweite Wechselrichter gleichspannungsseitig mit dem Zwischenkreis verbunden ist und ausgangsseitig mit der Arbeitsmaschine verbindbar ist und wobei der zweite Wechselrichter ausgebildet ist, die Arbeitsmaschine derart anzusteuern, dass die Arbeitsmaschine entweder als Motor oder als Generator betreibbar ist.

Ferner umfasst die Antriebseinheit eine Anbindung zu mindestens einem Energiespeicher und eine Schalteinheit, welche mit dem Stromrichter verbunden ist, wobei die Schalteinheit in einem ersten Betriebsmodus oder zweiten Betriebsmodus betreibbar ist, wobei in dem ersten Betriebsmodus die Schalteinheit ausgebildet ist, den Stromrichter mit dem mindestens einen Energiespeicher zu koppeln, um einen Energiefluss von dem mindestens einen Energiespeicher über die Schalteinheit zum Zwischenkreis des Stromrichters zu ermöglichen, und wobei die Schalteinheit in dem zweiten Betriebsmodus ausgebildet ist, den Stromrichter von dem mindestens einen Energiespeicher zu trennen. Ferner umfasst die Antriebseinheit eine Energiespeicher-Ladeeinheit, welche mit dem Stromrichter verbindbar ist, um dem Energiespeicher Energie zur Verfügung zu stellen.
Ein wesentlicher Punkt der vorliegenden Erfindung besteht darin, dass das Starten eines Motors, vorzugsweise eines Verbrennungsmotors wie etwa ein Dieselmotor, welcher zum Beispiel in Traktionsanwendungen für Schienenfahrzeugen, wie Triebzüge und Lokomotiven, aber auch in traktionsnahen Einsatzgebieten wie etwa Bus-Fahrzeuge, welche zudem mit Hybridantrieb ausgestattet sein können, eingesetzt wird, über eine bereits vorhandene Arbeitsmaschine erfolgt, welche mit dem Motor koppelbar ist. Die Arbeitsmaschine ist dabei entweder als Motor oder Generator betreibbar. Um den Motor zu starten, wird die Arbeitsmaschine im Motorbetrieb gefahren, welche das zum Anfahren des Dieselmotors benötigte Startmoment bereitstellt. Aufgrund des dualen Betriebsmodus der Arbeitsmaschine kann auf vorteilhafte Weise ein zusätzlicher Hilfsmotor eingespart werden, der bei ähnlichen aus dem Stand der Technik bekannten Applikationen eingesetzt würde, um das notwendige Startmoment für den Verbrennungsmotor bereitzustellen.

Das Anlaufen der Arbeitsmaschine kann mit Hilfe eines Energiespeichers erfolgen, welcher ein erforderliches Energiepotential bereitstellt. Der Energiespeicher ist über eine Schalteinheit mit dem Zwischenkreis einer Stromrichtereinheit gekoppelt ist, welche die Arbeitsmaschine mit Energie versorgt. Die Schalteinheit kann dabei mechanische und / oder elektrische Schaltmittel umfassen. Die Stromrichtereineinheit umfasst einen ersten Wechselrichter und einen zweiten Wechselrichter, wobei der erste und zweite Wechselrichter über einen Zwischenkreis miteinander elektrisch gekoppelt sind. Der Zwischenkreis kann vorzugsweise als Gleichspannungszwischenkreis mit einem kapazitiven Element ausgebildet sein. Die erfindungsgemässe Antriebseinheit kann dabei ausgelegt sein zur Verarbeitung von Zwischenkreisspannungen im Niederspannungsbereich und Mittelspannungsbereich mit Spannungskennwerten von mehr als 1000 Volt. Der erste Wechselrichter ist vorzugsweise als Stromrichter ausgebildet und ist wechselspannungsseitig mit einem Motor verbindbar, welcher vorzugsweise einen Elektromotor darstellen kann, welcher angetrieben werden kann. Der zweite Wechselrichter der Stromrichtereinheit ist ausgangseitig mit der Arbeitsmaschine gekoppelt.

Die Schalteinheit kann derart betrieben werden, dass der Energiespeicher zur Stromrichtereinheit hinzugeschaltet oder von ihr abgetrennt wird. Die Schalteinheit kann vorteilhafterweise als Hilfsumrichter ausgebildet sein, welcher die Umschaltung in den jeweiligen Betriebsmodus vornimmt. Die Umschaltung kann also durch einen unter Umständen bereits vorhandenen Hilfsumrichter erfolgen. Dies hat den Vorteil, dass die Anzahl der benötigten Bauteilkomponenten für die Umschaltung auf ein Minimum reduziert wird, was zur Kosten und Gewichtseinsparung der Antriebseinheit führen kann. Ausserdem ermöglicht eine derartige Schaltanordnung die Verwendung von kleineren, leistungsärmeren und damit preisgünstigeren Schalterkomponenten, da die benötigten Ladeströme aus dem Energiespeicher gegenüber einem direkten Start ohne Energiespeicher sehr viel kleiner dimensioniert werden können.

Die Schalteinheit kann zudem derart betrieben werden, dass im Fahrtbetrieb der Energiespeicher von der Stromrichtereinheit abgekoppelt ist, um stattdessen zum Beispiel andere, an die Schalteinheit angeschlossene Verbraucher mit Energie zu versorgen. Das heisst, dass ein Energiefluss von der Stromrichtereinheit über die Schalteinheit zu den an die Schalteinheit angeschlossenen Verbraucher wie etwa einem Bordnetz erfolgen kann.

Ein weiterer Aspekt der vorliegenden Erfindung besteht darin, dass der Energiespeicher nicht integraler Bestandteil der Antriebseinheit zu sein braucht. Die Antriebseinheit kann auch lediglich Schnittstellen zur Kopplung eines oder mehrerer Energiespeicher aufweisen, welche sich ausserhalb der Antriebseinheit befinden.

Der Energiespeicher, welcher in Form einer Batterie, zum Beispiel ein Bleiakkumulator, ausgebildet sein kann, stellt das für den Anlauf der Arbeitsmaschine benötigte Energiepotential in Form einer definierten Nennspannung zur Verfügung. Diese kann zum Beispiel 24 Volt, 36 Volt oder 110 Volt betragen. Der Energiespeicher wird durch die Schalteinheit derart geschaltet, dass ein Energiefluss von dem Energiespeicher über die Schalteinheit zu der Stromrichtereinheit und der Eingangsseite des zweiten Wechselrichters erfolgt. Reicht die von dem Energiespeicher bereitgestellt Nennspannung für den Startvorgang jedoch nicht aus, dann muss unter Umständen ein Hochsetzsteller zum Energiespeicher dazu geschaltet werden, um das geforderte Energiepotential für das Anlassen der Arbeitsmaschine bereitzustellen.

### Bevorzugte Ausführungsformen der Erfindung

In einer ersten bevorzugten Ausführungsform der vorliegenden Erfindung, umfasst die Antriebseinheit eine Energieladeeinheit, welche mit dem Stromrichter verbindbar ist, um dem Energiespeicher derart Energie zur Verfügung zu stellen. Der Energiespeicher ist dazu an einer Energieladeeinheit gekoppelt, so dass ein Energiefluss von dem ersten Wechselrichter der Stromrichtereinheit zur Energieladeeinheit ermöglicht wird. Doch auch der Einsatz einer sogenannten reversiblen Energieladeeinheit wäre denkbar. Diese hätte dann die Funktion, Energie über den Energiespeicher in die Stromrichtereinheit beziehungsweise dem Stromrichter einzuspeisen.

Während des Betriebs der Antriebseinheit, also zum Beispiel während der Fahrt des Fahrzeugs, welches betrieben wird, sorgt die Energieladeeinheit dafür, dass der Energiespeicher aufgeladen wird. Dadurch kann vorteilhafterweise sichergestellt werden, dass für den Startvorgang des Dieselmotors stets die erforderliche Energie zur Verfügung steht, damit die an der Stromrichtereinheit gekoppelte Arbeitsmaschine betrieben werden kann, welche wiederum das erforderliche Startmoment für den an ihr angeschlossenen Dieselmotor bereitstellt.

In einer weiteren bevorzugten Ausführungsform ist die Schalteinheit ausgebildet, den Stromrichter mit einem Versorgungsnetzanschluss zu koppeln, um einen Energiefluss von dem Zwischenkreis des Stromrichters über die Schalteinheit zum Versorgungsnetzanschluss hin zu ermöglichen. Die Schalteinheit ist vorzugweise als Hilfsbetriebeumrichter ausgebildet, welche einen entsprechenden Schalter aufweist. Es müssen dazu also nur minimale Anpassungen an die bereits vorhandene Hardware, wie etwa an einem unter Umständen bereits vorhandenen Hilfbetriebeumrichter, vorgenommen werden.

Die jeweilige Umschaltung durch die Schalteinheit bestimmt also die Richtung der Energieflüsse, welche zu der Stromrichtereinheit hin oder von der Stromrichtereinheit weg verlaufen. Das heisst die Stellung des Schalters legt fest, ob ein Energiefluss von der Stromrichtereinheit über die Schalteinheit zum Versorgungsnetzanschluss erfolgt oder ob ein Energiefluss von einem Energiespeicher über die Schalteinheit zur Stromrichtereinheit stattfindet. Dadurch, dass die Umschaltung an einem Hilfsbetriebsumrichter erfolgen kann, wird der Vorteil erzielt, dass leistungsärmere und damit kleinere Umschalter verwendet werden können, welche die Kosten und den Platzbedarf reduzieren.

In einer weiteren bevorzugten Ausführungsform der Erfindung, weist die Antriebseinheit einen Hilfsenergiespeicher auf, welche mit dem Zwischenkreis des Stromrichters verbindbar ist. Der Hilfsenergiespeicher kann beispielsweise als Supercap ausgebildet sein, welcher ein grösseres Energiepotential in Form eines Leistungspotentials zur Verfügung stellen kann als der Energiespeicher. Die Antriebseinheit kann darüber hinaus auch eine schnittstellenartige Anbindung zu einem Hilfsenergiespeicher aufweisen, so dass der Hilfsenergiespeicher an einem anderen Ort als die Antriebseinheit platziert werden kann. Die Verwendung eines Hilfsenergiespeichers ermöglicht es für das Starten des Dieselmotors ein Energiepotential bereitzustellen, welches unabhängig von dem bereitgestellten Energiepotential des Energiespeichers ist. Dies ist dann von Vorteil, wenn die Leistungsfähigkeit des Energiespeichers von Temperaturschwankungen abhängt. Dies ist insbesondere bei Batterien der Fall. Aus dem Stand der Technik ist bekannt, dass die Leistungsfähigkeit von Batterien wie etwa Bleiakkumulatoren und damit die Bereitstellung eines konstanten Energiepotentials beeinträchtigt wird, wenn diese niedrigen Umgebungstemperaturen ausgesetzt sind.

Die Aufladung des Hilfsenergiespeichers erfolgt in einer bevorzugten Ausführungsform der Erfindung über den Energiespeicher. Dazu wird der Hilfsenergiespeicher über eine Umrichtereinheit mit dem Zwischenkreis der Stromrichtereinheit verbunden. Auf diese Weise wird eine unzulässige Belastung eines bordinternen Energienetzes zur Bereitstellung von Energie in einem Fahrzeug, in welchem die Antriebseinheit eingesetzt wird, vermieden. Die Umrichtereinheit kann dabei als IGBT-Steller ausgebildet sein, welche zusätzlich über einen Bremswiderstand verfügt. Der Bremswiderstand ermöglicht zusätzlich die Abführung von überschüssiger Bremsenergie.

Insbesondere ist die Umrichtereinheit mit dem gleichspannungsseitigen Eingang des zweiten Wechselrichters der Stromrichtereinheit gekoppelt. Da der Energiespeicher über die Schalteinheit mit dem Stromrichter gekoppelt ist, wird der Hilfsenergiespeicher dadurch aufgeladen, wenn ein Energiefluss von dem Energiespeicher über die Schalteinheit zur Stromrichtereinheit und von dort über die Umrichtereinheit zum Hilfsenergiespeicher fliesst. Die Schalteinheit muss dazu entsprechend geschaltet sein, um einen solchen Energiefluss zu ermöglichen. Insbesondere während des fahrenden Betriebs des Fahrzeugs ist eine solche Aufladung des Hilfsenergiespeichers sinnvoll.

Es sei angemerkt, dass die überschüssige Bremsenergie auch direkt in den Hilfsenergiespeicher eingeleitet werden kann.

Die Umrichtereinheit ist zudem ausgebildet, ein im Hilfsenergiespeicher gespeichertes erstes Energiepotential auf ein zweites Energiepotential anzuheben, welches für den Zwischenkreis des Stromrichters bereitstellbar ist, wenn der Startvorgang des Dieselmotors initiiert werden soll. In solch einem Fall verfügt die Umrichtereinheit über einen Hochsetzsteller, welcher das aus dem Hilfsenergiespeicher verfügbare Spannungspotential erhöht.

Der Hilfsenergiespeicher ist zudem derart ausgebildet, in einem Lade- oder Entladebetrieb betreibbar zu sein. Im Lademodus wird der Hilfsenergiespeicher von dem Energiespeicher geladen. Dies erfolgt in der Regel vor dem Startvorgang des Verbrennungsmotors. Dazu wird die Schalteinheit in dem ersten Betriebsmodus betrieben, in welchem über die Schalteinheit der Energiespeicher mit dem Zwischenkreis des Stromrichters gekoppelt ist. Energie wird dann aus dem Energiespeicher über die Schalteinheit_in den Zwischenkreis gespeist. Diese Energie wird dann aus dem Zwischenkreis über die Umrichtereinheit in den Hilfsenergiespeicher geleitet. Die Ladung des Hilfsenergiespeichers mit Energie aus dem Energiespeicher kann beispielsweise auch während der Fahrt des Fahrzeugs erfolgen.

Wenn der Hilfsenergiespeicher im Entlademodus betrieben wird, dann ist der Hilfsenergiespeicher über die Umrichtereinheit mit dem Zwischenkreis des Stromrichters gekoppelt. Energie aus dem Hilfsenergiespeicher wird dann dem Zwischenkreis des Stromrichters zur Verfügung gestellt wird. Der Energiefluss aus dem Hilfsenergiespeicher in die Stromrichtereinheit ermöglicht eine Bereitstellung eines Energiepotentials für das Starten des Dieselmotors, welches unabhängig von dem Energiepotential des Energiespeichers ist. Mit Energiepotential ist hier das verfügbare Spannungspotential des Energiespeichers gemeint. Auf diese Weise kann also das bordinterne Netz eines Fahrzeugs, welches sonst hauptsächlich über eine Fahrzeugbatterie gespeist würde, entlastet werden. Ausserdem lässt sich dadurch der Einfluss der Temperaturabhängigkeit einer Starterbatterie zum Starten eines Verbrennungsmotors minimieren.

In einer weiteren bevorzugten Ausführungsform der vorliegenden Erfindung, verfügt die Schalteinheit über ein Lastschutzelement. Dieses Lastschutzelement kann dabei als Diode ausgebildet sein, um den Energiespeicher vor elektrischer Ueberlast zu schützen.

In einer bevorzugten Ausführungsform der vorliegenden Erfindung weisst die Antriebseinheit eine Steuereinheit auf. Die Steuereinheit ist ausgebildet, in Abhängigkeit von einer Betriebsart der Antriebseinheit, eine Kopplung zwischen der Stromrichtereinheit, der Schaltereinheit, dem Energiespeicher, dem Hilfsenergiespeicher und dem Versorgungsnetzanschluss zu steuern. Insbesondere kann die Steuereinheit derart betrieben werden, dass sie die Schalteinheit mit entsprechenden Steuerbefehlen versorgt, um zum Beispiel zwischen einem Lade- und Entlademodus für den Hilfsenergiespeicher zu schalten.

### Figurenbeschreibung

Nachfolgend werden Ausführungsformen der Erfindung anhand der Zeichnung detailliert erläutert. Hierbei zeigen schematisch
- Fig. 1: zeigt eine erste Ausführungsform der erfindungsgemässen Antriebseinheit;
- Fig. 2: zeigt eine erste Ausführungsform der Schalteinheit;
- Fig. 3: zeigt eine zweite Ausführungsform der Schalteinheit;
- Fig. 4: zeigt eine dritte Ausführungsform der Schalteinheit
- Fig. 5: zeigt eine zweite Ausführungsform der erfindungsgemässen Antriebseinheit;
- Fig. 6: zeigt eine vierte Ausführungsform der Schalteinheit;
- Fig. 7: zeigt eine fünfte Ausführungsform der Schalteinheit.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebene Ausführungsform steht beispielhaft für den Erfindungsgegenstand und hat keine beschränkende Wirkung.

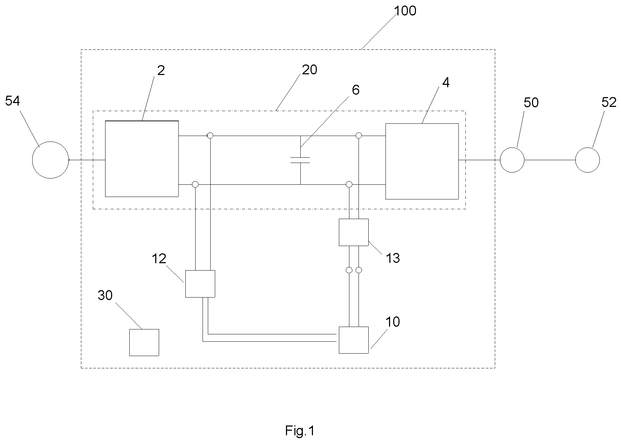

Fig. 1 zeigt erste Ausführungsform der erfindungsgemässen Antriebseinheit 100. Die Antriebseinheit 100 besteht in dieser beispielhaften Ausführungsform aus einer Stromrichtereinheit 20, einer Steuereinheit 30, einem Energiespeicher 10, einem Energiespeicher-Ladegerät 12 und einer Schalteinheit 13. Die Stromrichtereinheit 20 setzt sich zusammen aus einem ersten Wechselrichter 2, und einem zweiten Wechselrichter 4, wobei der erste Wechselrichter 2 über einen Zwischenkreis 6 mit dem ersten Wechselrichter 4 elektrisch verbunden ist. Der Zwischenkreis 6 ist vorzugsweise als Gleichspannungszwischenkreis mit einem kapazitiven Element ausgebildet. In Abhängigkeit des Einsatzgebiets der erfindungsgemässen Antriebseinheit 100, kann die Erfindung zum Beispiel als Generator im Niederspannungs- und / oder auch im Mittelspannungsbereich mit Spannungswerten über 1000 Volt eingesetzt werden. Der erste Wechselrichter 2 ist wechselspannungsseitig mit einem Motor 54 und gleichspannungsseitig mit dem Zwischenkreis 6 verbunden. Der Motor 54 kann zum Beispiel als elektrischer Motor ausgeführt sein. Der elektrische Motor kann dazu verwendet werden, beispielsweise ein Traktionsgerät anzutreiben wie etwa Traktionsachsen eines Zuges wie zum Beispiel eines Triebzuges oder einer Lokomotive.

Jedoch ist die vorliegende Erfindung nicht auf den Einsatz in Traktionsanwendungen beschränkt. Ein weiteres technisches Gebiet für die vorliegende Erfindung wäre zum Beispiel der Einsatz in Fahrzeugen wie Hybridbussen. Der zweite Wechselrichter 4 ist gleichspannungsseitig mit dem Zwischenkreis 6 verbunden und ausgangseitig, also wechselspannungsseitig, vorzugsweise mit einer Arbeitsmaschine 50 verbunden. Die Arbeitsmaschine kann dabei als Asynchronmaschine, Synchronmaschine oder auch als Elektromotor ausgebildet sein. Die Arbeitsmaschine kann ausserdem geregelt sein und zwar mit Sensor, aber auch vorzugsweise ohne Verwendung eines Sensors zur Drehzahlregelung. Die Arbeitsmaschine 50 ist mit einem Motor 52, vorzugsweise einem Verbrennungsmotor wie zum Beispiel einem Dieselmotor gekoppelt. Die Arbeitsmaschine 50 kann als Motor oder Generator betrieben werden. Im Generatorbetrieb stellen die Arbeitsmaschine 50 und Verbrennungsmotor 52 die nötige Energie zur Verfügung, um ein Fahrzeug anzutreiben, auf welchen die Antriebseinheit 100 installiert ist. Um den Motor 52 zu starten, wird die Arbeitsmaschine 50 als Motor betrieben, welche das für den Start des Motors 52 erforderliche Startmoment liefert.

Der Start des Motors 52 erfolgt also mit Hilfe der Arbeitsmaschine 50, welche zum Anfahren ebenfalls ein bestimmtes Energiepotential oder ein Spannungspotential benötigt. Dieses Energiepotential wird von einem Energiespeicher 10 bereitgestellt, welcher über eine Schalteinheit 13 mit dem Stromrichter 20 gekoppelt ist. Der Energiespeicher 10 ist an ein Energiespeicher- Ladegerät 12 gekoppelt, welches für die Aufladung des Energiespeichers 10 sorgt. Die Aufladung des Energiespeichers 10 kann vorzugsweise während eines fahrenden Betriebs des Fahrzeugs erfolgen, das von der Antriebseinheit 100 angetrieben wird. Die Energiespeicher-Ladeeinheit 12 ist mit dem gleichspannungsseitigen Ausgang des ersten Wechselrichters 2 des Stromrichters 20 gekoppelt, so dass ein Energiefluss von dem Stromrichter 20 über die Energiespeicher-Ladeeinheit 12 zu dem Energiespeicher 10 fliessen kann.

Der Energiespeicher 10 kann dabei vorzugsweise als Batterie ausgebildet sein. Die Batterie kann vorzugsweise Spannungen von 24 Volt, 36 Volt oder etwa 110 V bereitstellen, was in dem jeweiligen Anwendungsfall und Betriebsmodus der Antriebseinheit 100 abhängt. Der Energiespeicher kann jedoch ebenfalls ausgebildet sein als separate Starterbatterie, als eine in einem Fahrzeug vorhandene Fahrzeugbatterie, als Supercap mit Kondensator. Zusätzlich könnte in einer besonderen Ausführungsform der Energiespeicher 10 über eine sogenannte Depotspeisung mit Energie versorgt werden. Unter Depotspeisung ist eine Speisung von Energie zu verstehen, bei der die Energiequelle von einem ausserhalb des Fahrzeugs, welches mit der Antriebseinheit 100 betrieben wird, installierten und vorhandenem Energienetzes bereitgestellt wird.

Die Schalteinheit 13 ist dafür zuständig, je nach Erfordernis, den Energiespeicher 10 vom Stromrichter 20 an- oder abzukoppeln. So ist es zum Beispiel nicht notwendig, während des Fahrbetriebes den Energiespeicher 10 am Stromrichter 20 gekoppelt zu lassen. Die Aufladung des Energiespeichers 10 über das Energieladegerät 12 erfolgt, wenn der Energiespeicher 10 nicht mit der Schalteinheit 13 elektrisch verbunden ist. Der Energiespeicher 10 ist zwar in der dargestellten Ausführungsform Bestandteil der Antriebseinheit 100. Dies muss jedoch nicht zwingend so sein. Der Energiespeicher 10 kann auch ausserhalb der Antriebseinheit 100 installiert sein, sofern die Antriebseinheit 100 die entsprechenden Verbindungsschnittstellen bereitstellt. Die Schalteinheit 13 bewirkt eine zielgerichtete Ab- und Anschaltung von dem Energiespeicher 10, aber auch von anderen Verbrauchern oder Anschlüssen, wie etwa einem Versorgungsnetzanschluss, in Abhängigkeit des jeweiligen Betriebsmodus der Antriebseinheit 100.

Die Schalteinheit kann dabei als Hilfsumrichter ausgeführt sein, welcher die Umschaltung bewirkt. Der Umschalter kann aufgrund der vergleichsweisen niedrigen Ladeströme entsprechend leistungsarm dimensioniert werden, was Kosten und Platz für den Einbau des Umrichters in die Antriebseinheit 100 einspart, wenn stattdessen der Start des Motors 52 ausschliesslich über eine Startbatterie erfolgen würde.

Die Steuereinheit 30 bewirkt je nach Betriebsart der Antriebseinheit 100 eine Kopplung zwischen dem in Abhängigkeit von einer Betriebsart der Antriebseinheit 100, eine Kopplung zwischen dem Stromrichter 20, der Schaltereinheit 13, dem Energiespeicher 10, dem Energiespeicher-Ladegerät 12 und an die Schalteinheit 13 angeschlossenen Verbrauchern, wie zum Beispiel einem Versorgungsnetzanschluss (nicht dargestellt). In der Regel wird die Steuereinheit 30 also auf die Schalteinheit 13 einwirken, um in Abhängigkeit von der gewünschten Betriebsart, die Komponenten der Antriebseinheit 10 miteinander zu koppeln. In Bezug auf das Ladegerät 12 sei angemerkt, dass dieses auch als ein reversibles Ladegerät ausgebildet sein. Ein solches Ladegerät würde es ermöglichen, dass auch Energie von dem Energiespeicher 10 in den Stromrichter 10 fliessen kann. Eine solche Anwendung wäre vorzugsweise dann praktikabel, wenn beispielsweise keine Schalteinheit 8, 13 in der Antriebseinheit 100 vorhanden wäre.

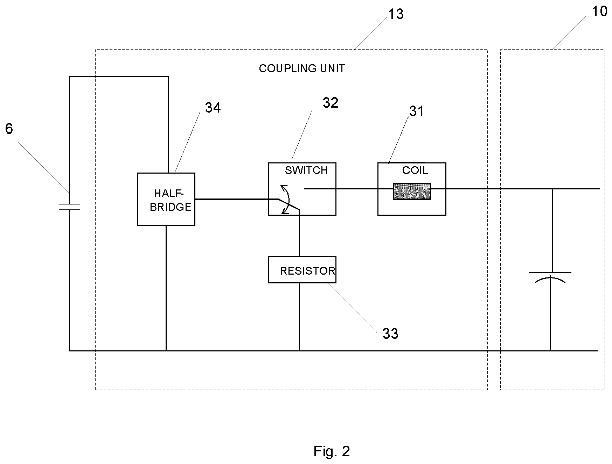

Fig. 2 zeigt eine erste detaillierte Ausführungsform der Schalteinheit 13. Die Schalteinheit 13 ist mit dem Energiespeicher 10, welcher ein definiertes Energiepotential bereitstellt, um den Motor 52 zu starten, und dem Zwischenkreis 6 des Stromrichter 20 (nicht dargestellt) gekoppelt,. In der gezeigten Ausführungsform weist die Schalteinheit 13, eine Spule 31, einen Schalter 32, und der in der Umrichtereinheit 20 normalerweise stets vorhandenen Einrichtung für die elektrische Bremse, den Bremswiderstand 33 und einen Spannungsadapter 34 auf. Der Schalter 32 koppelt entweder im ersten Fall den Energiespeicher 10 und die Spule 31 oder im zweiten Fall den Widerstand 33 mit dem Spannungsadapter 34 an den Zwischenkreis 6. Es sei angemerkt, dass der Schalter 32 auch durch von aussen zugeführten Steuersignale einer Steuereinheit (nicht dargestellt) entsprechend in seinem Betriebsverhalten beeinflusst werden kann. Im ersten Fall bewirkt die Kopplung der Spule 31 mit dem Energiespeicher 10, dass das von dem Energiespeicher 10 gelieferte Energiepotential um einen bestimmten Betrag auf ein höheres Energiepotential gehoben wird. Die Schalteinheit 13 arbeitet in diesem ersten Fall als Hochsetzsteller. Dies ist immer dann nötig, wenn das verfügbare Energiepotential des Energiespeichers 10 nicht ausreicht, um die Arbeitsmaschine 50 anlaufen zu lassen. Die Spule 31 hat zusätzlich auch eine Filterfunktion für den Energiespeicher 10, um den Stromrippel zu minimieren, welche unter Umständen dem Energiespeicher 10 schaden würden. Der Spannungsadapter 34 kann als DC/-DC-Wandler betrachtet werden, der zum Beispiel als Halbbrücke realisiert sein kann. Im zweiten Fall, bei dem der Schalter 32 den Widerstand 33 mit dem Spannungsadapter 34 verbindet, wirkt der Widerstand 33 als sogenannter Bremswiderstand. Diese Schaltkonfiguration wird vorzugsweise im Bremsbetrieb verwendet. Wenn das Fahrzeug abgebremst wird, dann wird überschüssige Bremsenergie im Bremswiderstand 33 verheizt..

In der in Figur 2 gezeigten Konfiguration kann also die Schalteinheit 13 die Funktion eines DC-DC-Konverters aufweisen, welcher die von dem Energiespeicher 10 bereitgestellte Spannung auf ein höheres Niveau transferiert. Insbesondere bei Traktionsanwendungen kann eine bereits bestehende Hardware-Konfiguration, wie ein elektrischer Bremskreis durch wenige Anpassungen entsprechend modifiziert werden, um die beschriebene Funktion auf einfache Weise zu erzielen.

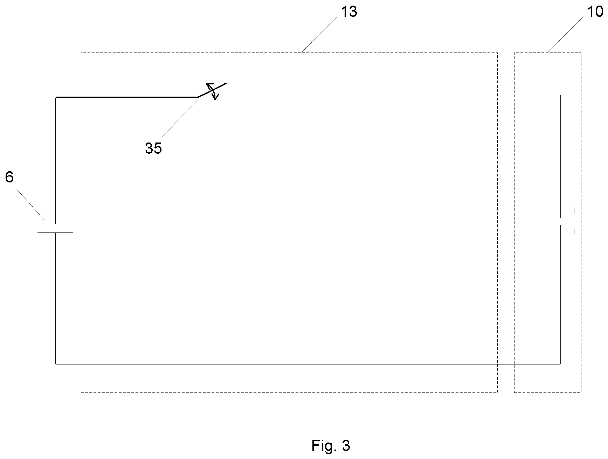

Figur 3 zeigt eine zweite alternative Ausführungsform der Schalteinheit 13, wie der Energiespeicher 10 mit dem Zwischenkreis 6 des Stromrichters 20 für den Startvorgang des Motors 52 entsprechend der Figur 1 gekoppelt werden kann, damit ein Energiefluss von dem Energiespeicher 10 über die Schalteinheit 13 zum Zwischenkreis 6 des Stromrichters 20 fliessen kann. In dieser Schaltungsvariante sorgt ein mechanischer oder elektrischer Schalter 35 dafür, dass der Energiespeicher 10 mit dem Zwischenkreis 6 des Stromrichter 20 gekoppelt wird. Diese sehr einfache und deshalb sehr kostengünstige Konfiguration wird vorzugsweise dann eingesetzt, wenn der Energiespeicher 10 bereits derart dimensioniert ist, dass er eine ausreichende Spannung liefern kann, welche nicht erst auf ein höheres Energieniveau transferiert werden muss, bevor die Energie in den Zwischenkreis 6 des Stromrichter 6 transferiert wird.

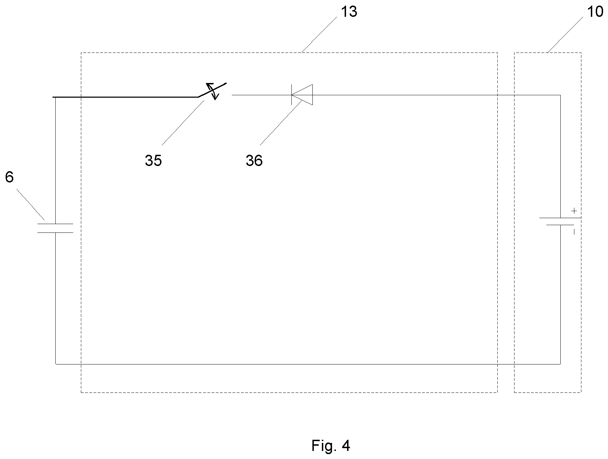

Figur 4 unterscheidet sich mit der in Figur 3 gezeigten alternativen Ausführungsform der Schalteinheit 13 lediglich dadurch, dass ein Lastschutzelement 36 als dynamisches Kontrollelement in den Stromkreis zwischen dem Energiespeicher 10 und dem Schalter 35 integriert ist. Das Lastschutzelement 36 kann dabei vorzugsweise als eine in Sperrrichtung betriebene Diode ausgebildet sein. Diese soll den Energiespeicher 10 vor Ueberlast schützen.

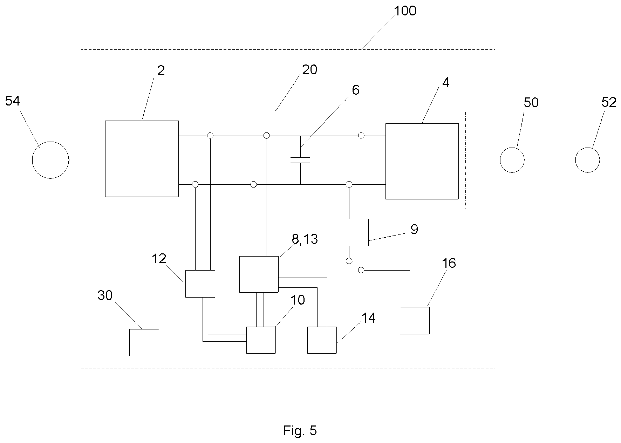

Fig. 5 zeigt eine zweite und alternative Ausführungsform der erfindungsgemässen Antriebseinheit 100. Die gezeigte Ausführungsform unterscheidet sich von der Figur 1 zum einen dadurch, dass die Schalteinheit 13 mit dem gleichspannungsseitigen Ausgang des ersten Wechselrichter 2 verbunden ist. Zudem ist an der Schalteinheit 13 ein Anschluss für Verbraucher wie etwa ein Versorgungsnetz 14 von 400 V, koppelbar. Ausserdem verfügt die Antriebseinheit 100 nun über eine Umrichtereinheit 9, welche an den Zwischenkreis 6 des Stromrichters 20 gekoppelt ist. An der Umrichtereinheit 9 ist ein Hilfsenergiespeicher 16 angeschlossen, welcher zum Beispiel als Supercap ausgebildet sein kann. Ein Supercap kann einen Energiespeicher wie etwa einen Kondensator sein. Der Hilfsenergiespeicher 16 kann dabei unter anderem für eine Entlastung des Bordnetzes eines Fahrzeuges sorgen, da damit eine bereits vorhandene Fahrzeugbatterie entlastet wird, wenn die Fahrzeugbatterie nicht die benötigte Energie zum Starten des Motors 52 allein bereitstellen muss.

In dieser alternativen Schaltungsvariante der Antriebseinheit 100 wird das für das Starten des Motors 52 notwendige Energiepotential von dem Hilfsenergiespeicher 16 bereitgestellt. Der Hilfsenergiespeicher 16 muss nicht Bestandteil der Antriebseinheit 100 sein und kann auch ausserhalb der Antriebseinheit 100 angebracht sein.

Damit der Hilfsenergiespeicher 16 mit Energie aufgeladen wird, schaltet die Schalteinheit 13 den Energiespeicher 10, welcher beispielsweise während der Fahrt durch das Energiespeicher-Ladegerät 12 aufgeladen wurde, an der Stromrichtereinheit 20 hinzu und sorgt dafür, dass ein Leistungsfluss von dem Energiespeicher 10 über die Schalteinheit 13 zum Zwischenkreis 6 der Stromrichtereinheit 20 erfolgt. Von dem Zwischenkreis 6 der Stromrichtereinheit 20 wird der übertragene Leistungsfluss schliesslich über die Umrichtereinheit 9 zu dem Hilfsenergiespeicher 16 geleitet. Im Lademodus wird also durch den Energiespeicher 10 über die Schalteinheit 13 ein Leistungsfluss zu dem Hilfsenergiespeicher 16 geleitet. Im Normalbetrieb der Antriebseinheit schaltet die Schalteinheit 13 den Energiespeicher 10 weg und koppelt stattdessen einen Verbraucher 14 mit der Schalteinheit 13, so dass ein Leistungsfluss aus dem Zwischenkreis 6 zu dem Verbraucher 14 erfolgen kann. Der Verbraucher 14 kann dabei als ein Anschluss an ein Spannungs- oder Stromnetz ausgebildet sein. Der Verbraucher 14 kann jedoch auch als Anschluss für eine Depotsteckdose zur Depotspeisung ausgebildet sein.

Wenn der Hilfsenergiespeicher 16 aufgeladen ist, dann kann dessen Energie für den Startvorgang des Motors 52 verwendet werden. Dazu wird die Umrichtereinheit 9 entsprechend geschaltet - zum Beispiel durch die Steuereinheit 30, so dass ein Leistungsfluss von dem Hilfsenergiespeicher 16 über die Umrichtereinheit 9 in den Zwischenkreis 6 erfolgt. Auf diese Weise wird erreicht, dass der Startvorgang des Motors 52 durch Anlassen der als Motor betriebenen Arbeitsmaschine 50 unabhängig von dem vorhandenen Energiepotential beziehungsweise dem vorhandenen Spannungspotential des Energiespeichers 10 erfolgt. Dies kann insbesondere dann ein wesentlicher Aspekt sein, wenn die Leistungsfähigkeit des Energiespeichers 10 beeinträchtigt ist, zum Beispiel durch niedrige Umgebungstemperaturen, denen der Energiespeicher 10 möglicherweise ausgesetzt ist. Denkbar wäre auch ein Startvorgang, welcher ohne Energiespeicher 10 erfolgt, nur unter Verwendung des Hilfsenergiespeichers 16.

Die Umrichtereinheit 9 kann beispielsweise als IGBT-Steller mit Bremswiderstand ausgebildet sein, welche zugleich die erzeugte Bremsenergie aufnimmt.

Die in Figur 5 gezeigt Konfiguration hat auch den Vorteil, dass für das Starten des Motors 52 ein Starten direkt über eine Starterbatterie, welches vorzugsweise als Fahrzeugbatterie ausgebildet sein kann, vermieden wird. Grosse Ladeströme aus der Fahrzeugbatterie werden auf diese Weise vermieden und tragen zu einer Schonung des bordinternen Energienetzes des Fahrzeugs bei. Das Starten des Motors 52 erfolgt in der in Figur 1 dargestellten Konfiguration über die Arbeitsmaschine 50, welche zwischen dem Stromrichter 20 und dem Motor 52 geschaltet ist.

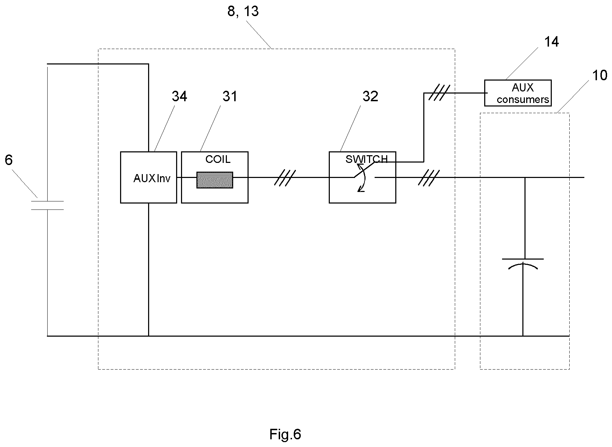

Fig. 6 zeigt eine vierte Ausführungsform der Schalteinheit 13, wie sie vorzugsweise in Figur 5 eingesetzt werden kann. Die Schalteinheit 13 verfügt über einen Schalter 32, welcher entweder Verbraucher 14 oder den Energiespeicher 10 mit einer Spule 31 und einem Spannungsadapter 34, welcher auch als Gleichspannungswandler ausgebildet sein kann, koppelt. Dieser sorgt dafür, dass bei Verwendung eines leistungsarmen Energiespeichers 10 das vom Energiespeicher 10 bereitgestellte Energiepotential erhöht wird, bevor dieses an den Zwischenkreis 6 übermittelt wird. Die Schalteinheit 13 hat deshalb auch die Funktion eines Hochsetzstellers. Der Schalter 32 kann vorzugsweise auch ein dreipoliger Schalter sein.

Die Spule 31 sorgt als Filter zur Dämpfung der harmonischen Oberschwingungen, wenn ein Verbraucher 14 wie zum Beispiel ein Hilfsbetriebsnetz mit dem Spannungsadapter 34 gekoppelt ist. Wenn der Spannungsadapter 34 mit dem Energiespeicher 10 gekoppelt ist, dann wirkt die Spule 31 in Verbindung mit dem Spannungsadapter 34 als Hochsetzsteller.

In Bezug auf die Funktion eines Hochsetzstellers kann für die vorliegende Erfindung zusammenfassend gesagt werden, dass diese von einem Supercap bereitgestellt werden kann, welcher über einen Energiespeicher, wie einer Batterie, welche als Starter- oder Fahrzeugbatterie ausgebildet sein kann, vorgeladen werden kann. Denkbar wäre jedoch auch die Funktion eine Hochstellers über den Zwischenkreis bereitzustellen, welcher über eine Batterie vorgeladen wird. Bei entsprechender Dimensionierung der einzelnen Bauteilkomponenten kann die vorliegende Erfindung jedoch auch ohne die Verwendung eines Hochsetzstellers auskommen.

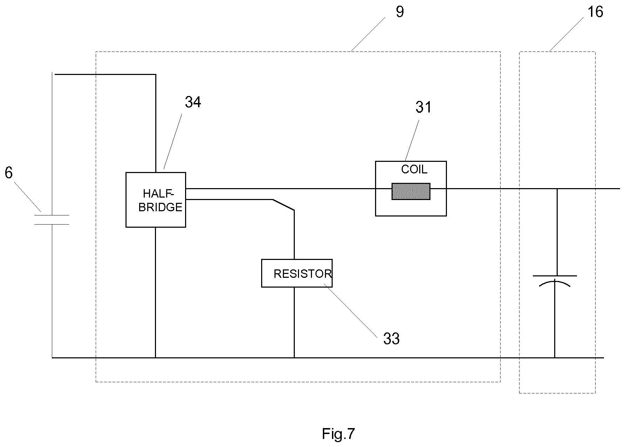

Fig. 7 zeigt eine Ausführungsform der Umrichtereinheit 9, welche wie in Figur 5 gezeigt, mit einem Hilfsenergiespeicher 16 und dem Zwischenkreis 6 der Stromrichtereinheit 20 gekoppelt ist. Die Umrichtereinheit 9 weist eine Spule 31, einen Widerstand 33, welcher als Bremswiderstand eingesetzt wird und einen Gleichspannungswandler 34 auf, welcher als Halbbrücke realisiert werden kann. Der Gleichspannungswandler 34 ist einerseits sowohl mit der Spule 31 und dem Widerstand 33 und andererseits mit dem Zwischenkreis 6 signaltechnisch gekoppelt.

Beim Starten des Motors 52 (nicht dargestellt) wird Energie aus dem Hilfsenergiespeicher 16 über die Schalteinheit 13 in den Zwischenkreis 6 übertragen. Wenn das Fahrzeug bremst, dann wird Energie über den Zwischenkreis 6 in den Bremswiderstand 33 der Umrichtereinheit 9 geleitet.

### Referenzsymbolliste

- 2: Stromrichter
- 4: Wechselrichter
- 6: Zwischenkreis
- 8, 13: Schalteinheit
- 9: Umrichtereinheit
- 10: Energiespeicher
- 12: Energiespeicher-Ladeeinheit
- 13: Lastschutzelement
- 14: Versorgungsnetzanschluss
- 16: Hilfsenergiespeicher
- 20: Stromrichtereinheit
- 30: Steuereinheit
- 31: Spule
- 32: Schalter
- 33: Widerstand
- 34: Gleichspannungswandler
- 35: Schalter
- 36: Lastschutzelement
- 50: Arbeitsmaschine
- 52: (Diesel-)Motor
- 54: Antriebsmotor (für Traktion)
- 100: Antriebseinheit

## Patentansprüche

1. Antriebseinheit (100) umfassend:
• ein Stromrichter (20), welcher mit einer Arbeitsmaschine (50) verbindbar ist, umfassend einen Zwischenkreis (6), welcher einerseits mit einem ersten Wechselrichter (2) und andererseits mit einem zweiten Wechselrichter (4) koppelbar ist, wobei der erste Wechselrichter (2) ausgelegt ist, wechselspannungsseitig mit einem Motor (54) verbindbar zu sein und gleichspannungsseitig mit dem Zwischenkreis (6) verbunden ist und wobei der zweite Wechselrichter (4) gleichspannungsseitig mit dem Zwischenkreis (6) verbunden ist und wechselspannungsseitig mit der Arbeitsmaschine (50) verbindbar ist und wobei der zweite Wechselrichter (4) ausgebildet ist, die Arbeitsmaschine (50) derart anzusteuern, dass die Arbeitsmaschine (50) entweder als Motor oder als Generator betreibbar ist;
• eine Anbindung zu mindestens einem Energiespeicher (10);
• eine Schalteinheit (8, 13), welche mit dem Stromrichter (20) verbunden ist, wobei die Schalteinheit (8, 13) in einem ersten Betriebsmodus oder zweiten Betriebsmodus betreibbar ist, wobei in dem ersten Betriebsmodus die Schalteinheit (8, 13) ausgebildet ist, den Stromrichter (20) mit dem mindestens einen Energiespeicher (10) zu koppeln, um einen Energiefluss von dem mindestens einen Energiespeicher (10) über die Schalteinheit (8, 13) zum Zwischenkreis (6) des Stromrichters (20) zu ermöglichen, und wobei die Schalteinheit (8, 13) in dem zweiten Betriebsmodus ausgebildet ist, den Stromrichter (20) von dem mindestens einen Energiespeicher (10) zu trennen;
wobei die Antriebseinheit (100) eine Energiespeicher-Ladeeinheit (12) umfasst, welche mit dem Stromrichter (20) verbindbar ist, um dem Energiespeicher (10) Energie zur Verfügung zu stellen,
wobei die Aufladung des Energiespeichers (10) über die Energiespeicher-Ladeeinheit (12) erfolgt, wenn die Schalteinheit (8, 13) im zweiten Betriebsmodus ist, und
wobei die Schalteinheit (8, 13) ausgebildet ist, den Stromrichter (20) mit einem Versorgungsnetzanschluss (14) zu koppeln, um einen Energiefluss von dem Zwischenkreis (6) des Stromrichters (20) über die Schalteinheit (8, 13) zum Versorgungsnetzanschluss (14) hin zu ermöglichen.

2. Antriebseinheit (100) nach Anspruch 1, **dadurch gekennzeichnet, dass** die Schalteinheit (8, 13) im zweiten Betriebsmodus ist, wenn der Energiespeicher (10) nicht mit der Schalteinheit (8, 13) elektrisch verbunden ist.

3. Antriebseinheit (100) nach Anspruch 1 oder 2, **dadurch gekennzeichnet, dass** die Antriebseinheit (100) einen Hilfsenergiespeicher (16) aufweist, welche mit dem Zwischenkreis (6) des Stromrichters (20) verbindbar ist.

4. Antriebseinheit (100) nach Anspruch 3, **dadurch gekennzeichnet, dass** zwischen dem Hilfsenergiespeicher (16) und dem Zwischenkreis (6) des Stromrichters (20) eine Umrichtereinheit (9) geschaltet ist,

5. Antriebseinheit (100) nach Anspruch 4, **dadurch gekennzeichnet, dass** der Hilfsenergiespeicher (16) ausgebildet ist, in einem Lade- oder Entladebetrieb betreibbar zu sein, wobei im Lademodus die Schalteinheit (8, 13) in dem ersten Betriebsmodus betrieben wird, in welchem über die Schalteinheit (8, 13) der Energiespeicher (10) mit dem Zwischenkreis (6) des Stromrichters (20) gekoppelt ist, so dass Energie aus dem Energiespeicher (10) über die Schalteinheit (8, 13) in den Zwischenkreis (6) speisbar ist, welche dann aus dem Zwischenkreis (6) über die Umrichtereinheit (9) in den Hilfsenergiespeicher (16) übertragen wird, und wenn der Hilfsenergiespeicher (16) im Entlademodus betrieben wird, der Hilfsenergiespeicher (16) über die Umrichtereinheit (9) mit dem Zwischenkreis (6) des Stromrichters (20) gekoppelt ist, damit Energie aus dem Hilfsenergiespeicher (16) dem Zwischenkreis (6) des Stromrichters (20) zur Verfügung gestellt wird.

6. Antriebseinheit (100) nach einem der vorangegangenen Ansprüche, **dadurch gekennzeichnet, dass** die Schalteinheit (8, 13) ein Lastschutzelement (13) aufweist, welches ausgebildet ist, den Energiespeicher (10) vor elektrischer Ueberlast zu schützen.

7. Antriebseinheit (100) nach Anspruch 5, **dadurch gekennzeichnet, dass** das Lastschutzelement (13) eine Diode ist.

8. Antriebseinheit (100) nach einem der vorangegangenen Ansprüche, **dadurch gekennzeichnet, dass** die Antriebseinheit (100) eine Steuereinheit (30) aufweist, welche ausgebildet ist, in Abhängigkeit von einer Betriebsart der Antriebseinheit (100), eine Kopplung zwischen dem Stromrichter (20), der Schaltereinheit (8, 13), dem Energiespeicher (10), dem Hilfsenergiespeicher (16) und dem Versorgungsnetzanschluss (14) zu steuern.

9. Antriebseinheit (100) nach einem der vorangegangenen Ansprüche, **dadurch gekennzeichnet, dass** der Hilfsenergiespeicher (16) als Supercap ausgebildet ist.

10. Antriebseinheit (100) nach einem der vorangegangenen Ansprüche, **dadurch gekennzeichnet, dass** der Zwischenkreis (6) des Stromrichters (20) als Gleichspannungszwischenkreis ausgebildet ist.

11. Antriebseinheit (100) nach einem der vorangegangenen Ansprüche, **dadurch gekennzeichnet, dass** die Schalteinheit (8, 13) mechanische und / oder elektrischer Schaltmittel umfasst.

12. Antriebseinheit (100) nach einem der vorangegangenen Ansprüche, **dadurch gekennzeichnet, dass** der Energiespeicher (16) eine Batterie ist.

13. Fahrzeug mit einer Antriebseinheit (100) nach einem der Ansprüche 1 bis 12.

14. Fahrzeug nach Anspruch 13, **dadurch gekennzeichnet, dass** das Fahrzeug ein Schienenfahrzeug ist.

15. Fahrzeug nach Anspruch 13, **dadurch gekennzeichnet, dass** das Fahrzeug mit einem hybriden Antrieb versehen ist.

## Claims

1. Drive unit (100) comprising:
• a power converter (20), which is connectable to a working machine (50), comprising an intermediate circuit (6), which is coupleable firstly to a first inverter (2) and secondly to a second inverter (4), wherein the first inverter (2) is designed to be connectable to a motor (54) on the AC voltage side and is connected to the intermediate circuit (6) on the DC voltage side, and wherein the second inverter (4) is connected to the intermediate circuit (6) on the DC voltage side and is connectable to the working machine (50) on the AC voltage side, and wherein the second inverter (4) is designed to drive the working machine (50) in such a way that the working machine (50) is operable either as a motor or as a generator;
• a link to at least one energy store (10);
• a switching unit (8, 13) connected to the power converter (20), wherein the switching unit (8, 13) is operable in a first operating mode or second operating mode, wherein in the first operating mode the switching unit (8, 13) is designed to couple the power converter (20) to the at least one energy store (10) in order to enable an energy flow from the at least one energy store (10) via the switching unit (8, 13) to the intermediate circuit (6) of the power converter (20) and wherein in the second operating mode the switching unit (8, 13) is designed to disconnect the power converter (20) from the at least one energy store (10);
wherein the drive unit (100) comprises an energy store charging unit (12), which is connectable to the power converter (20) in order to make energy available to the energy store (10),
wherein the charging of the energy store (10) is effected via the energy store charging unit (12), if the switching unit (8, 13) is in the second operating mode, and
wherein the switching unit (8, 13) is designed to couple the power converter (20) to a supply network terminal (14) in order to enable an energy flow from the intermediate circuit (6) of the power converter (20) via the switching unit (8, 13) toward the supply network terminal (14).

2. Drive unit (100) according to Claim 1, **characterized in that** the switching unit (8, 13) is in the second operating mode, if the energy store (10) is not electrically connected to the switching unit (8, 13).

3. Drive unit (100) according to Claim 1 or 2, **characterized in that** the drive unit (100) comprises an auxiliary energy store (16), which is connectable to the intermediate circuit (6) of the power converter (20).

4. Drive unit (100) according to Claim 3, **characterized in that** a converter unit (9) is connected between the auxiliary energy store (16) and the intermediate circuit (6) of the power converter (20).

5. Drive unit (100) according to Claim 4, **characterized in that** the auxiliary energy store (16) is designed to be operable in charging or discharging operation, wherein in the charging mode the switching unit (8, 13) is operated in the first operating mode, in which the energy store (10) is coupled to the intermediate circuit (6) of the power converter (20) via the switching unit (8, 13), such that energy from the energy store (10) is feedable into the intermediate circuit (6) via the switching unit (8, 13), said energy then being transferred from the intermediate circuit (6) via the converter unit (9) into the auxiliary energy store (16), and, if the auxiliary energy store (16) is operated in the discharging mode, the auxiliary energy store (16) is coupled to the intermediate circuit (6) of the power converter (20) via the converter unit (9) in order that energy from the auxiliary energy store (16) is made available to the intermediate circuit (6) of the power converter (20).

6. Drive unit (100) according to any of the preceding claims, **characterized in that** the switching unit (8, 13) has a load protection element (13) designed to protect the energy store (10) against electrical overload.

7. Drive unit (100) according to Claim 5, **characterized in that** the load protection element (13) is a diode.

8. Drive unit (100) according to any of the preceding claims, **characterized in that** the drive unit (100) comprises a control unit (30), which is designed to control a coupling between the power converter (20), the switch unit (8, 13), the energy store (10), the auxiliary energy store (16) and the supply network terminal (14) depending on an operating mode of the drive unit (100).

9. Drive unit (100) according to any of the preceding claims, **characterized in that** the auxiliary energy store (16) is embodied as a supercap.

10. Drive unit (100) according to any of the preceding claims, **characterized in that** the intermediate circuit (6) of the power converter (20) is embodied as a DC voltage intermediate circuit.

11. Drive unit (100) according to any of the preceding claims, **characterized in that** the switching unit (8, 13) comprises mechanical and/or electrical switching means.

12. Drive unit (100) according to any of the preceding claims, **characterized in that** the energy store (16) is a battery.

13. Vehicle comprising a drive unit (100) according to any of Claims 1 to 12.

14. Vehicle according to Claim 13, **characterized in that** the vehicle is a rail vehicle.

15. Vehicle according to Claim 13, **characterized in that** the vehicle is provided with a hybrid drive.

## Revendications

1. Unité d'entraînement (100) comprenant :
- un convertisseur de courant (20), lequel peut être raccordé à une machine de travail (50), comprenant un circuit intermédiaire (6), lequel peut être couplé à un premier onduleur (2), d'une part, et à un deuxième onduleur (4), d'autre part, où le premier onduleur (2) est configuré pour être raccordé à un moteur (54), du côté de la tension alternative, et est raccordé au circuit intermédiaire (6), du côté de la tension continue, et où le deuxième onduleur (4) est raccordé au circuit intermédiaire (6), du côté de la tension continue, et peut être raccordé à la machine de travail (50), du côté de la tension alternative, et où le deuxième onduleur (4) est conçu pour piloter la machine de travail (50) de telle sorte que la machine de travail (50) peut être exploitée soit comme un moteur, soit comme un générateur ;
- une connexion avec au moins un accumulateur d'énergie (10) ;
- une unité de commutation (8, 13) qui est raccordée au convertisseur de courant (20), où l'unité de commutation (8, 13) peut être exploitée dans un premier mode de fonctionnement ou dans un deuxième mode de fonctionnement, où l'unité de commutation (8, 13), dans le premier mode de fonctionnement, est conçue pour coupler le convertisseur de courant (20) avec l'au moins un accumulateur d'énergie (10) en vue de rendre possible un flux d'énergie depuis l'au moins un accumulateur d'énergie (10), en passant par l'unité de commutation (8, 13), jusqu'au circuit intermédiaire (6) du convertisseur de courant (20), et où l'unité de commutation (8, 13), dans le deuxième mode de fonctionnement, est conçue pour séparer le convertisseur de courant (20) de l'au moins un accumulateur d'énergie (10) ;
où l'unité d'entraînement (100) comprend une unité de charge (12) de l'accumulateur d'énergie, laquelle peut être raccordée au convertisseur de courant (20) en vue de mettre à disposition de l'énergie à l'attention de l'accumulateur d'énergie (10) ;
où la charge de l'accumulateur d'énergie (10) a lieu par l'intermédiaire de l'unité de charge (12) de l'accumulateur d'énergie, quand l'unité de commutation (8, 13) se trouve dans le deuxième mode de fonctionnement ; et
où l'unité de commutation (8, 13) est conçue pour coupler le convertisseur de courant (20) avec une connexion à l'alimentation du secteur (14) en vue de rendre possible un flux d'énergie depuis le circuit intermédiaire (6) du convertisseur de courant (20), en passant par l'unité de commutation (8, 13), jusqu'à la connexion à l'alimentation du secteur (14).

2. Unité d'entraînement (100) selon la revendication 1, **caractérisée en ce que** l'unité de commutation (8, 13) se trouve dans le deuxième mode de fonctionnement, quand l'accumulateur d'énergie (10) n'est pas raccordé électriquement à l'unité de commutation (8, 13).

3. Unité d'entraînement (100) selon la revendication 1 ou 2, **caractérisée en ce que** l'unité d'entraînement (100) présente un accumulateur d'énergie auxiliaire (16) qui peut être raccordé au circuit intermédiaire (6) du convertisseur de courant (20).

4. Unité d'entraînement (100) selon la revendication 3, **caractérisée en ce qu'**une unité de convertisseur de fréquence (9) est mise en circuit entre l'accumulateur d'énergie auxiliaire (16) et le circuit intermédiaire (6) du convertisseur de courant (20).

5. Unité d'entraînement (100) selon la revendication 4, **caractérisée en ce que** l'accumulateur d'énergie auxiliaire (16) est conçu afin de pouvoir fonctionner dans un mode de fonctionnement de chargement ou de déchargement, où l'unité de commutation (8, 13), dans le mode de fonctionnement de chargement, fonctionne dans le premier mode de fonctionnement, dans lequel l'accumulateur d'énergie (10) est couplé avec le circuit intermédiaire (6) du convertisseur de courant (20) par l'intermédiaire de l'unité de commutation (8, 13), de telle sorte que de l'énergie peut être alimentée dans le circuit intermédiaire (6) à partir de l'accumulateur d'énergie (10), par l'intermédiaire de l'unité de commutation (8, 13), laquelle énergie est alors transmise depuis le circuit intermédiaire (6) dans l'accumulateur d'énergie auxiliaire (16), en passant par l'unité de convertisseur de fréquence (9), et lorsque l'accumulateur d'énergie auxiliaire (16) fonctionne dans le mode de fonctionnement de déchargement, l'accumulateur d'énergie auxiliaire (16) est couplé avec le circuit intermédiaire (6) du convertisseur de courant (20) par l'intermédiaire de l'unité de convertisseur de fréquence (9), afin que de l'énergie puisse être mise à disposition du circuit intermédiaire (6) du convertisseur de courant (20) à partir de l'accumulateur d'énergie auxiliaire (16) .

6. Unité d'entraînement (100) selon l'une des revendications ci-dessus, **caractérisée en ce que** l'unité de commutation (8, 13) présente un élément de protection de charge (13), lequel est conçu pour protéger l'accumulateur d'énergie (10) d'une surcharge électrique.

7. Unité d'entraînement (100) selon la revendication 5, **caractérisée en ce que** l'élément de protection de charge (13) est une diode.

8. Unité d'entraînement (100) selon l'une des revendications ci-dessus, **caractérisée en ce que** l'unité d'entraînement (100) présente une unité de commande (30), laquelle est conçue pour commander, en fonction d'un mode de fonctionnement de l'unité d'entraînement (100), un couplage entre le convertisseur de courant (20), l'unité de commutation (8, 13), l'accumulateur d'énergie (10), l'accumulateur d'énergie auxiliaire (16) et la connexion à l'alimentation du secteur (14).

9. Unité d'entraînement (100) selon l'une des revendications ci-dessus, **caractérisée en ce que** l'accumulateur d'énergie auxiliaire (16) est conçu sous la forme d'un supercondensateur.

10. Unité d'entraînement (100) selon l'une des revendications ci-dessus, **caractérisée en ce que** le circuit intermédiaire (6) du convertisseur de courant (20) est conçu sous la forme d'un circuit intermédiaire à tension continue.

11. Unité d'entraînement (100) selon l'une des revendications ci-dessus, **caractérisée en ce que** l'unité de commutation (8, 13) comprend des moyens de commutation mécaniques et/ou électriques.

12. Unité d'entraînement (100) selon l'une des revendications ci-dessus, **caractérisée en ce que** l'accumulateur d'énergie (16) est une batterie.

13. Véhicule avec une unité d'entraînement (100) selon l'une des revendications 1 à 12.

14. Véhicule selon la revendication 13, **caractérisée en ce que** le véhicule est un véhicule ferroviaire.

15. Véhicule selon la revendication 13, **caractérisée en ce que** le véhicule est pourvu d'un entraînement hybride.
